# EUROPEAN PATENT APPLICATION

(11) **EP 2 500 812 A1**
(43) Date of publication of application: **19.09.2012**
(21) Application number: 12158725.7
(22) Date of filing: 09.03.2012
(51) Int. Cl.: G06F 3/048, G06F 9/44, G06F 17/30

(54) **Mobile terminal and content display program**

(30) Priority: 16.03.2011 JP 2011058367
(71) Applicant: Fujitsu Limited, Kawasaki-shi, Kanagawa 211-8588 (JP)
(72) Inventor: Yamamura, Kazuyuki, Kawasaki-shi, Kanagawa 211-8588 (JP); Akama, Katsuaki, Kawasaki-shi, Kanagawa 211-8588 (JP)
(74) Representative: Stebbing, Timothy Charles

(57) **Abstract**

A mobile terminal includes a display unit displaying a display image generated based on a acquired content; a touched divided region detector detecting a touched divided region from among divided regions formed by virtually dividing a screen of the display unit; a storage storing a table in which the divided region is associated with an area having a display image to be preferentially generated among display images generated based on the content; an image processor, when the screen of the display unit is touched, referring to the table, specifying an area corresponding to the divided region detected by the touched divided region detector, and generating the display image corresponding to the area specified in the content; and a display controller displaying the display image generated by the image processor on the display unit in accordance with displacement of a touched position.

## Description

### FIELD

The present invention relates to a mobile terminal and content display program.

### BACKGROUND

There has been known a mobile terminal having a touch panel display. Among Web contents to be displayed on the display, there are some Web contents having display regions larger than the region to be displayed on the touch panel. In this case, by touching a part of the Web content displayed on the touch panel and displacing (dragging) the touch position, the part of the Web content to be displayed on the touch panel may also be displaced.

By displacing (dragging) the content displayed on the touch panel, the part of the Web content not being displayed on the touch panel may be displayed, so that the entire Web content may be reviewed.

As a method of displaying the part not being displayed, there has been a method in which the scrolling direction of the display is detected and the display data in the scrolling direction are prefetched (read in advance) as in Japanese Laid-open Patent Publication No. 2006-343846.

When a content is drawn, some browsers may interpret HTML (HyperText Markup Language)and perform rendering to fit the size of the touch panel.

However, when the content includes many images and moving pictures, it may take longer for the rendering. As a result, a user may not scroll the display comfortably.

Further, in the method of Japanese Laid-open Patent Publication No. 2006-343846, plural images are prefetched only when the "continuous scroll" operation is designated. Namely, no images are prefetched unless the "continuous scroll" operation is designated. Therefore, in some cases, some delay may occur before the prefetch process is started.

### SUMMARY

According to an aspect of an embodiment, a mobile terminal includes a display unit displaying a display image generated based on a content which is acquired; a touched divided region detector detecting a divided region which is touched from among divided regions formed by virtually dividing a screen of the display unit; a storage storing a table in which the divided region is associated with an area having a display image to be preferentially generated among display images generated based on the content; an image processor, when the screen of the display unit is touched, referring to the table, specifying an area corresponding to the divided region detected by the touched divided region detector, and generating the display image corresponding to the area specified in the content; and a display controller displaying the display image generated by the image processor on the display unit in accordance with displacement of a position which is touched.

### BRIEF DESCRIPTION OF DRAWINGS

FIG. 1 illustrates an example of a content region and a display region;
FIG. 2 illustrates an example of a display area in the display region;
FIG. 3 is an example of an image prefetch table 1;
FIG. 4 is an example of the image prefech table 2;
FIG. 5 is an example block diagram of a mobile terminal;
FIG. 6 is an example functional block diagram of the mobile terminal;
FIG. 7 is an example flowchart of operations of the mobile terminal;
FIG. 8 is another example flowchart of operations of the mobile terminal;
FIG. 9 is an modified example of a corresponding relationship between the content region and the display region;
FIG. 10 is a modified example of the display area in the display region; and
FIG. 11 is a modified example of the image prefetch table.

### DESCRIPTION OF EMBODIMENT

Preferred embodiments of the present invention are described with reference to the accompanying drawings.

Throughout the figures, the same reference numerals are used to describe the same or equivalent elements, and repeated descriptions thereof may be omitted.

### Mobile terminal

A mobile terminal 100 displays a region corresponding to a part of a content to be displayed. Herein, the case where the region corresponding to a part of the content to be displayed is displayed includes a case where a size of the region of the content is larger than a size of the region to be displayed.

Further, the case where the region corresponding to a part of the content to be displayed is displayed includes a case where a region of a content is enlarged so that the enlarged size of the region of the content is larger than the size of the region to be displayed.

In the following, the term the "display region" refers to a region that may be displayed within the display (screen) space of the mobile terminal 100. Further, the term the "content region" refers to a region of the entire content. Further, a content includes a Web content and the like. Further, the content may be provided via a network (i.e., a server).

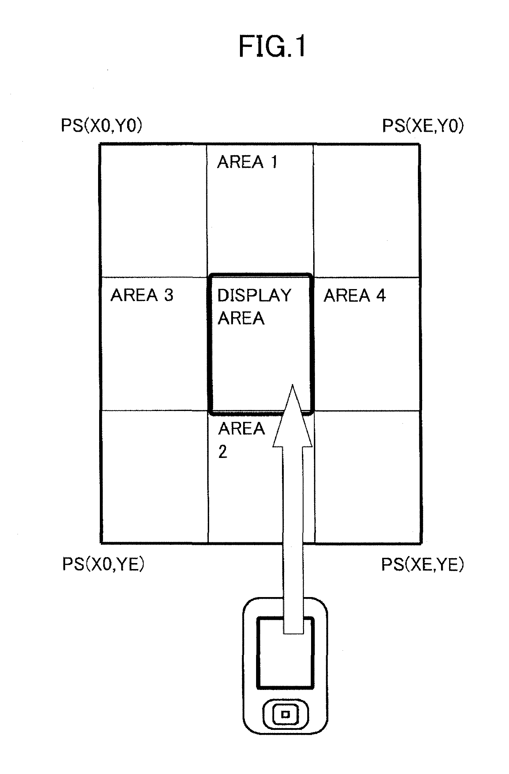

FIG. 1 illustrates an example of the content region and the display region. In the example of FIG. 1, the content region is defined by the coordinates PS(X0,Y0), PS(XE,Y0), PS(X0,YE), and PS(XE,YE). The display region is defined by the coordinates PS((XE-X0)/3,(YE-Y0)/3), PS(2(XE-X0)/3,(YE-Y0)/3), PS((XE-X0)/3,2(YE-Y0)/3), and PS(2(XE-X0)/3,2(YE-Y0)/3).

Further, in the example of FIG. 1, the content region is virtually divided into nine regions. The size of the divided region may be substantially equal to the size of the display region. In this example, the mobile terminal 100 displays one of the divided regions of the content region. Further, herein, the divided region disposed on the upper side of the display region is called "area 1".

The divided region disposed on the lower side of the display region is called "area 2". The divided region disposed on the left-hand side of the display region is called "area 3". The divided region disposed on the right-hand side of the display region is called "area 4".

When the user would like to see a part of the content region not being displayed on the screen, the user may display (see) the part of the content region not having been displayed by touching the screen and displacing (dragging) the position of touching the screen. By doing this, the user may display the part of the content region in the direction opposite to the displacing direction.

For example, by displacing the touch position in the lower direction, the user may see the upper side of the content region (i.e., area 1). Further, for example, by displacing the touch position in the upper direction, the user may see the lower side of the content region (i.e., area 2). Further, for example, by displacing the touch position in the right-hand direction, the user may see the left-hand side of the content region (i.e., area 3). Further, for example, by displacing the touch position in the left-hand direction, the user may see the right-hand side of the content region (i.e., area 4).

In the mobile terminal 100, the screen is virtually divided into plural regions, so that plural screen areas are formed. Namely, the display region is virtually divided into plural regions.

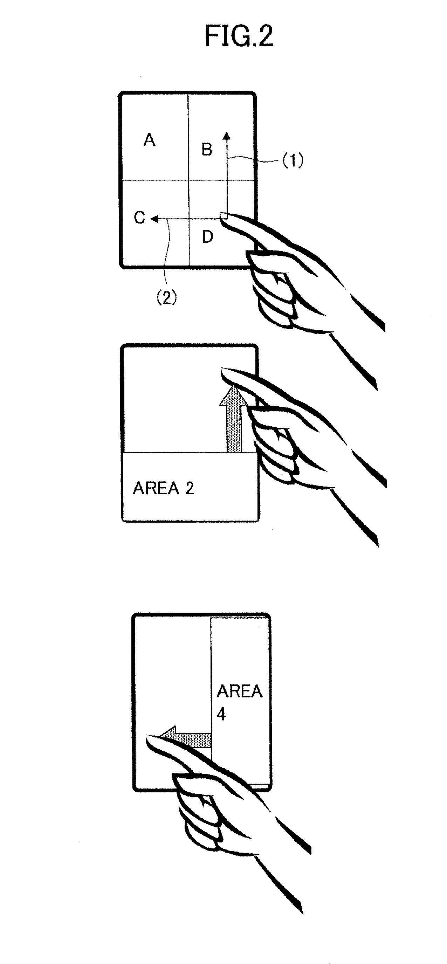

FIG. 2 illustrates an example of screen areas. In the example of FIG. 2, the screen is virtually divided into four divided regions (which are a screen area A, a screen area B, a screen area C, and a screen area D). The number of the divided regions may be two, three, or even five or more.

When a user touches the screen of the mobile terminal 100, the mobile terminal 100 detects the position where the user touches the screen. Hereinafter, the information indicating the (current) touch position (i.e., the information indicating the position where the user currently touches) is referred to as a "touch position". Among the touch positions, the touch position where the user initially touches is herein referred to as an "initial touch position".

Herein, if the user touches the screen after touching and releasing his/her finger from the screen, the operation of touching again is also assumed as the operation that the user "initially touches" the screen.

The mobile terminal 100 detects the screen area including the initial touch position. FIG. 2 illustrates the example where the divided region including the initial touch position is the screen area D.

In the example of FIG. 2, when the touch position displaces in the upper direction (i.e., arrow (1) direction) from the initial touch position, the area 2 is displayed. Further, when the touch position displaces in the left-hand direction (i.e., arrow (2) direction) from the initial touch position, the area 4 is displayed.

In the mobile terminal 100, the screen area is associated with an area having an image that is to be preferentially acquired (prefetched) when the initial touch position is included in the screen area. To that end, in the mobile terminal 100, the screen area is associated with a direction that the touch position is more likely to be displaced from the initial touch position when the initial touch position is included in the screen area.

The direction in which the touch position is more likely to be displaced may be expressed using the terms, for example, upper, lower, left-hand, or right-hand. Further, the direction may be expressed using oblique directions. Otherwise, for example, as the direction, the directions to be arranged in the decreasing order of the probability of the directions in which the touch position is more likely to be displaced may be used (set).

Further, in the mobile terminal 100, a part of the content region in the direction opposite to the direction in which the touch position is more likely to be displaced from the initial touch position relative to the display region is set. Herein, the region in the direction opposite to the direction in which the touch position is more likely to be displaced from the initial touch position relative to the display region is referred to as a "partial content region".

When a user touches the screen, the mobile terminal 100 performs a process for displaying the partial content region based on the initial touch position. Specifically, the mobile terminal 100 performs a process of acquiring an image of the partial content region based on the initial touch position.

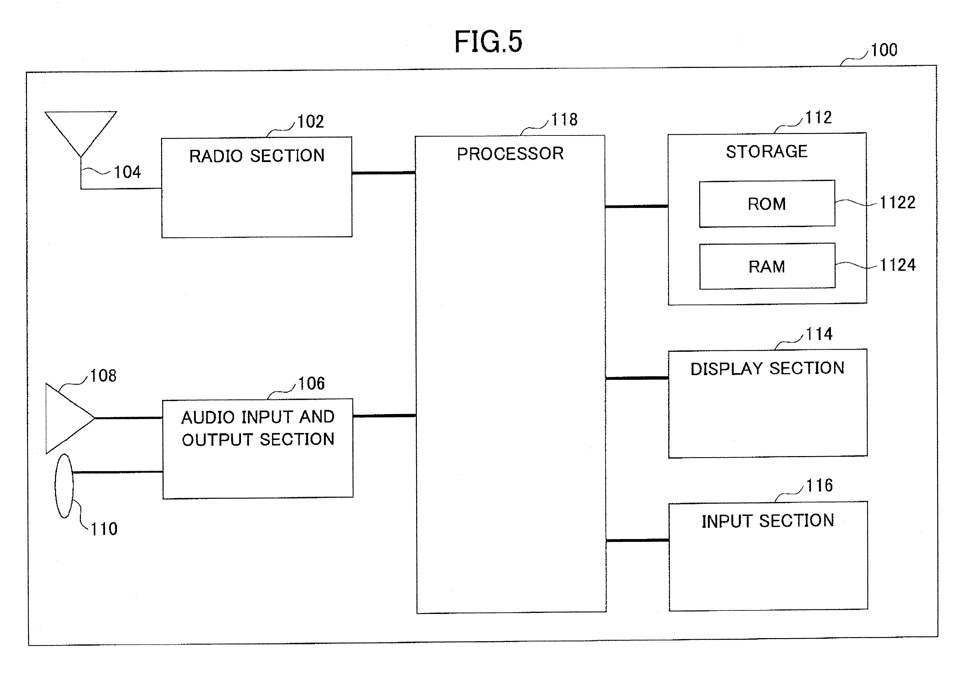

Herein, the process of acquiring an image refers to a process of generating a display image by interpreting, for example, the HTML data acquired externally. The HTML data acquired externally are temporarily stored in a RAM (Random Access Memory) 1124 (FIG. 5).

Then, the HTML data are interpreted, so that the display data such as bit map data are generated and displayed. In this case, depending on the specification of a processor 118 (FIG. 5), it may take longer to perform a process for generating the display data. However, when a partial display image is generated as described above, it may become possible to improve the scroll performance.

The mobile terminal 100 includes a table in which the screen area is associated with the partial content region to be preferentially acquired when the initial touch position is included in the screen area. Hereinafter, the table is referred to as an "image prefetch table".

### Image prefetch table 1

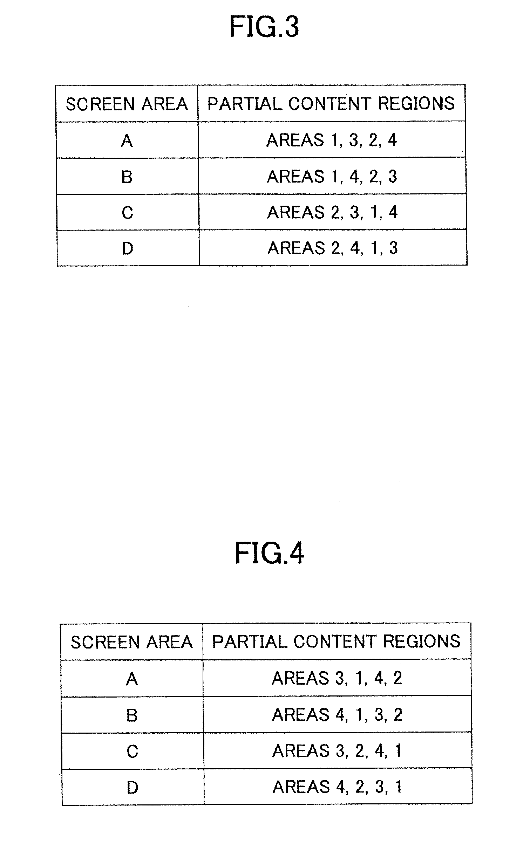

FIG. 3 is an example image prefetch table. FIG. 3 illustrates a case of the content region having the vertical distance greater than the horizontal distance. Herein, the image prefetch table as illustrated in FIG. 3 may be referred to as a "vertically-long content image prefetch table".

In the example of FIG. 3, the screen area is associated with the partial content region to be preferentially acquired when the initial touch position is included in the screen area. Namely, the screen area is associated with the priority order (priority) of the partial content regions having the images to be acquired. Further, the size of the partial content region may be substantially equal to the size of the display region.

When the initial touch position is included in the area A, due to the position of the initial touch position, the touch position is more likely to be displaced in the lower or right-hand direction rather than in the upper or left-hand direction, respectively.

Further, the content region has the vertical distance greater than the horizontal distance. Therefore, it is thought that the touch position is more likely to be displaced in the upper and lower direction rather than in the left and right direction.

Therefore, in this case, it is thought that the decreasing order the probability (likelihood) in the directions in which the touch position is more likely to be displaced is lower, right-hand, upper, and left-hand. Therefore, the decreasing order of the priority of acquiring the images of the partial content regions for the area A is area 1, area 3, area 2, and area 4.

When the initial touch position is included in the area B, due to the position of the initial touch position, the touch position is more likely to be displaced in the lower or left-hand direction rather than in the upper or right-hand direction, respectively.

Further, the content region has the vertical distance greater than the horizontal distance. Therefore, it is thought that the touch position is more likely to be displaced in the upper and lower direction rather than in the left and right direction.

Therefore, in this case, it is thought that the decreasing order the probability (likelihood) in the directions in which the touch position is more likely to be displaced is lower, left-hand, upper, and right-hand. Therefore, the decreasing order of the priority of acquiring the images of the partial content regions for the area B is area 1, area 4, area 2, and area 3.

When the initial touch position is included in the area C, due to the position of the initial touch position, the touch position is more likely to be displaced in the upper or right-hand direction rather than in the lower or left-hand direction, respectively.

Further, the content region has the vertical distance greater than the horizontal distance. Therefore, it is thought that the touch position is more likely to be displaced in the upper and lower direction rather than in the left and right direction.

Therefore, in this case, it is thought that the decreasing order the probability (likelihood) in the directions in which the touch position is more likely to be displaced is upper, right-hand, lower, and left-hand. Therefore, the decreasing order of the priority of acquiring the images of the partial content regions for the area C is area 2, area 3, area 1, and area 4.

When the initial touch position is included in the area D, due to the position of the initial touch position, the touch position is more likely to be displaced in the upper or left-hand direction rather than in the lower or right-hand direction, respectively.

Further, the content region has the vertical distance greater than the horizontal distance. Therefore, it is thought that the touch position is more likely to be displaced in the upper and lower direction rather than in the left and right direction.

Therefore, in this case, it is thought that the decreasing order the probability (likelihood) in the directions in which the touch position is more likely to be displaced is upper, left-hand, lower, and right-hand. Therefore, the decreasing order of the priority of acquiring the images of the partial content regions for the area D is area 2, area 4, area 1, and area 3.

### Image prefetch table 2

FIG. 4 is an example image prefetch table. FIG. 4 illustrates a case of the content region having the horizontal distance greater than the vertical distance. Herein, the image prefetch table as illustrated in FIG. 4 may be referred to as a "horizontally-long content image prefetch table".

In the example of FIG. 4, the screen area is associated with the partial content region to be preferentially acquired when the initial touch position is included in the screen area. Namely, the screen area is associated with the priority order (priority) of the partial content regions having the images to be acquired. Further, the size of the partial content region may be substantially equal to the size of the display region.

When the initial touch position is included in the area A, due to the position of the initial touch position, the touch position is more likely to be displaced in the lower or right-hand direction rather than in the upper or left-hand direction, respectively. Further, the content region has the horizontal distance greater than the vertical distance. Therefore, it is thought that the touch position is more likely to be displaced in the left and right direction rather than in the upper and lower direction.

Therefore, in this case, it is thought that the decreasing order the probability (likelihood) in the directions in which the touch position is more likely to be displaced is right-hand, lower, left-hand, upper. Therefore, the decreasing order of the priority of acquiring the images of the partial content regions for the area A is area 3, area 1, area 4, and area 2.

When the initial touch position is included in the area B, due to the position of the initial touch position, the touch position is more likely to be displaced in the lower or left-hand direction rather than in the upper or right-hand direction, respectively. Further, the content region has the horizontal distance greater than the vertical distance. Therefore, it is thought that the touch position is more likely to be displaced in the left and right direction rather than in the upper and lower direction.

Therefore, in this case, it is thought that the decreasing order the probability (likelihood) in the directions in which the touch position is more likely to be displaced is left-hand, lower, right-hand, and upper. Therefore, the decreasing order of the priority of acquiring the images of the partial content regions for the area B is area 4, area 1, area 3, and area 2.

When the initial touch position is included in the area C, due to the position of the initial touch position, the touch position is more likely to be displaced in the upper or right-hand direction rather than in the lower or left-hand direction, respectively. Further, the content region has the horizontal distance greater than the vertical distance. Therefore, it is thought that the touch position is more likely to be displaced in the left and right direction rather than in the upper and lower direction.

Therefore, in this case, it is thought that the decreasing order the probability (likelihood) in the directions in which the touch position is more likely to be displaced is right-hand, upper, left-hand, and lower. Therefore, the decreasing order of the priority of acquiring the images of the partial content regions for the area C is area 3, area 2, area 4, and area 1.

When the initial touch position is included in the area D, due to the position of the initial touch position, the touch position is more likely to be displaced in the upper or left-hand direction rather than in the lower or right-hand direction, respectively. Further, the content region has the horizontal distance greater than the vertical distance. Therefore, it is thought that the touch position is more likely to be displaced in the left and right direction rather than in the upper and lower.

Therefore, in this case, it is thought that the decreasing order the probability (likelihood) in the directions in which the touch position is more likely to be displaced is left-hand, upper, right-hand, and lower. Therefore, the decreasing order of the priority of acquiring the images of the partial content regions for the area D is area 4, area 2, area 3, and area 1.

When the touch position displaces from the initial touch position, the mobile terminal 100 displays the content region in the direction opposite to the direction that the touch position displaces. For example, when a user touches the screen, the mobile terminal 100 refers to the image prefetch table and displays the image having been preferentially acquired. Namely, upon the user touching the screen, a process of acquiring the image of the "partial content region" (i.e., the image that is to be (preferentially) acquired) is performed.

By doing this, it may become possible to smoothly displace the display region. Further, when the displacement operation is continued (i.e., the touch position is continuously changed), the mobile terminal 100 may reset (redefine) the initial touch position based on the displaced touch position at a predetermined period, so as to repeat the process of acquiring the image of the "partial content region" based on the redefined initial touch position at the predetermined period.

Further, when the user stops touching the screen after touching the screen, the mobile terminal 100 stops the process of acquiring an image. Specifically, the mobile terminal 100 deletes the image having been acquired based on the initial touch position. By deleting the image having been acquired based on the initial touch position, the storage region to be used for acquiring the image may be released (deleted).

FIG. 5 is an example block diagram of the mobile terminal 100. Specifically, FIG. 5 mainly illustrates an example hardware configuration.

As illustrated in FIG. 5, the mobile terminal 100 includes a radio section 102. The radio section 102 transmits and receives data to and from the base station (not shown) via an antenna 104 connected to the radio section 102. For example, the radio section 102 converts data from the processor 118 into a radio signal, and transmits the radio signal from the antenna 104. Further, the radio section 102 converts a radio signal from the antenna 104 into a baseband signal, and inputs the baseband signal to the processor 118.

The mobile terminal 100 further includes an audio input and output section 106. The audio input and output section 106 transmits a signal from the processor 118 to a speaker 108 connected to the audio input and output section 106, so that the speaker 108 outputs sound based on the signal from the processor 118. Further, the audio input and output section 106 transmits a signal from a microphone 110 based on sound collected by the microphone 110 to the processor 118.

The mobile terminal 100 further includes a storage 112. The storage 112 includes a ROM (Read Only Memory) 1122 and the RAM 1124. The storage 112 stores an application program and the image prefetch table. For example, the storage 112 may be an external storage device storing data and programs in a computer. The external storage device includes a hard disk (fixed disk) and the like. The application program refers to the software having functions that a user operates on the mobile terminal 100. For example, the application program may include word processing software, spreadsheet software, DBMS (Data Base Management System) software, media player software and the like.

An operating system (OS) is the software that provides interfaces to the application software, the interfaces being generated by abstracting the hardware. The operating system supports the touch panel function. A touch panel driver is the software that provides the processor 118 with the interface to an input section 116, the processor 118 functioning as (with) the operating system.

The mobile terminal 100 further includes a display unit 114. The display unit 114 may be a display so as to display a processing state and a processing result based on the processes performed by the mobile terminal 100. The processing state and the processing result may be provided based on processes of the operating system and the application program. The display may include a liquid crystal display, an organic EL (Electro-Luminance) display and the like.

The mobile terminal 100 further includes the input section 116. The input section 116 may include, for example, a touch panel. The touch panel may also be called a touch screen. Further, the input section 116 and the display unit 114 may be integrated into a single unit. The input section 116 is provided for inputting instructions and data to the mobile terminal 100. The instructions include instructions to the operating system and the application program.

The mobile terminal 100 further includes the processor 118. The processor 118 is connected to the radio section 102, the audio input and output section 106, the storage 112, the display unit 114, and the input section 116.

### Function of mobile terminal

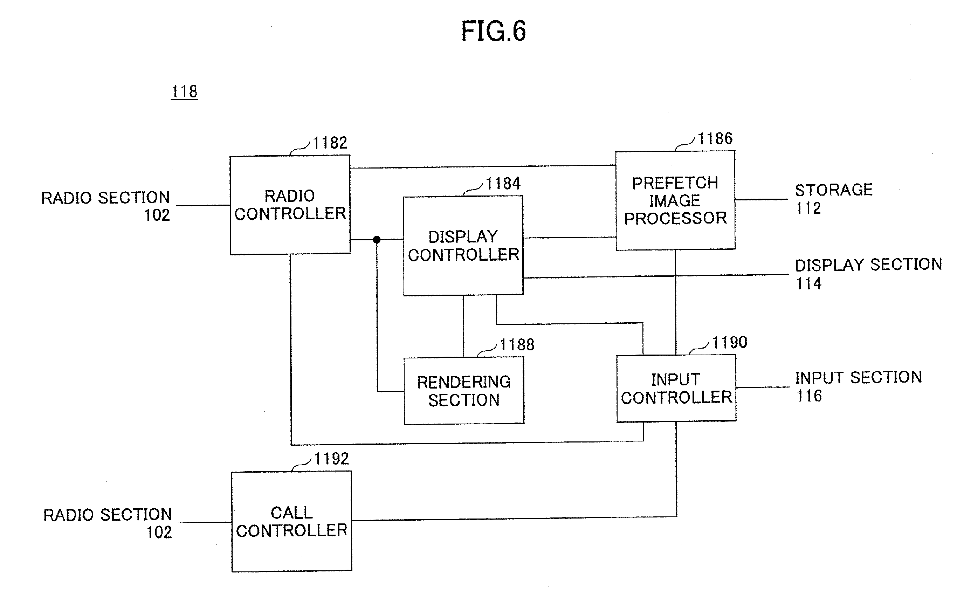

FIG. 6 is an example block diagram of the mobile terminal 100. FIG. 6 mainly illustrates the functions performed by the processor 118. The function may be realized by the process started by executing a program by the processor 118, the program being stored in the storage 112.

When an operation to display contents is performed on the mobile terminal 100, a part of the content region may be displayed. Namely, when the size of the content region is larger than the size of the display region, only a part of the content region may be displayed. Further, even when the size of the content region is not larger than the size of the display region, but if the size of the content region is enlarged, only a part of the content region may be displayed.

The mobile terminal 100 determines the size of the content to be displayed, and provides (prepares) the corresponding image prefetch table. Namely, based on the vertical distance and the horizontal distance of the content to be displayed, the mobile terminal 100 provides the image prefetch table to be used.

Specifically, the mobile terminal 100 provides the image prefetch table to be used based on whether the content to be displayed is a horizontally-long content or a vertically-long content. If the content to be displayed is square-shaped, either the image prefetch table corresponding to the horizontally-long content or the image prefetch table corresponding to the vertically-long content may be provided.

When a user touches the screen of the mobile terminal 100, the mobile terminal 100 detects the initial touch position. The mobile terminal 100 refers to the image prefetch table, and acquires the image of the partial content region corresponding to the screen area including the initial touch position. Namely, the mobile terminal 100 acquires the image included in the partial content region based on the image prefetch table.

When the touch position displaces from the initial touch position, the mobile terminal 100 displays the content region in the direction opposite to the displacement direction by using the acquired partial content region. For example, the mobile terminal 100 displays the partial content region having been acquired when the user touches the screen.

Further, when the user stops touching after touching the screen (e.g., when the user separates his/her finger from the screen), the mobile terminal 100 stops acquiring an image included in the partial content region.

The functions performed by the mobile terminal 100 include the functions performed by a radio controller 1182. Based on a request from an input controller 1190 to acquire content to be input, the radio controller 1182 inputs a content acquisition instruction to the radio section 102, the content acquisition instruction being for acquiring the content. Further, the radio controller 1182 inputs the content to a display controller 1184, a prefetch image processor 1186, and a rendering section 1188, the content having been to be input by the radio section 102 in response to the content acquisition instruction.

The functions performed by the mobile terminal 100 include the functions performed by the display controller 1184, The display controller 1184 controls so that the content input by the radio controller 1182 is displayed on the display unit 114. For example, when only a part of the content region input by the radio controller 1182 may be displayed, the display controller 1184 controls so that the part of the content region may be displayed.

Further, the display controller 1184 controls to display the partial content region by using a result of the image processing of the partial content region from the prefetch image processor 1186 based in the information indicating the touch position input by the input controller 1190. Further, when rendered content is input by the rendering section 1188, the display controller 1184 may not acquire a result of the image processing of the partial content region from the prefetch image processor 1186. This is because the content may have been processed so that the size of the content fits the size of the screen.

The functions performed by the mobile terminal 100 include the functions performed by the prefetch image processor 1186. Based on the content input by the radio controller 1182, the prefetch image processor 1186 determines the size of the content. Based on the determination result of the size of the content, the prefetch image processor 1186 provides (determines) the image prefetch table to be used from among plural image prefetch tables stored in the storage 112.

Namely, based on the vertical distance and the horizontal distance of the content to be displayed, the prefetch image processor 1186 provides the image prefetch table. Specifically, the prefetch image processor 1186 provides either the vertically-long content image prefetch table or horizontally-long content image prefetch table. The process of providing the image prefetch table is performed when plural image prefetch tables are stored in the storage 112,

Further, the prefetch image processor 1186 refers to the image prefetch table based on the initial touch position input by the input controller 1190, and acquires the image included in the partial content region corresponding to the screen area including the initial touch position. Further, the prefetch image processor 1186 outputs the image included in the corresponding partial content region based on a screen request from the display controller 1184.

The functions performed by the mobile terminal 100 include the functions performed by the rendering section 1188. The rendering section 1188 performs rendering based on the content input from the radio controller 1182. The rendering section 1188 inputs the rendered content to the display controller 1184.

The functions performed by the mobile terminal 100 include the functions performed by the input controller 1190. The input controller 1190 inputs the request to acquire the content to be input by the input section 116 to the radio controller 1182. Further, the input controller 1190 inputs the information to the display controller 1184 and the prefetch image processor 1186, the information indicating the touch position to be input from the input section 116. Further, the input controller 1190 inputs the information to a call controller 1192, the information indicating the call connection and the call disconnection input from the input section 116.

The functions performed by the mobile terminal 100 include the functions performed by the call controller 1192. The call controller 1192 performs processes related to the call connection and the call disconnection based on the information indicating the call connection and the call disconnection input from the call controller 1192.

Further, when the content input by the radio section 102 may be accompanied by sound output, the processor 118 inputs information for outputting sound by the audio input and output section 106. Further, the processor 118 may convert a voice from the microphone 110 into characters and display the characters on the display unit 114.

### Process of mobile terminal

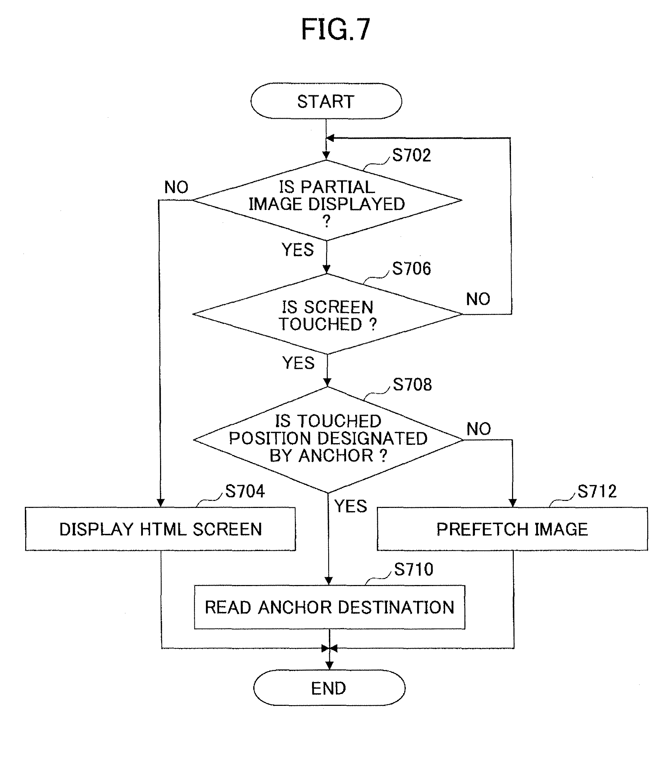

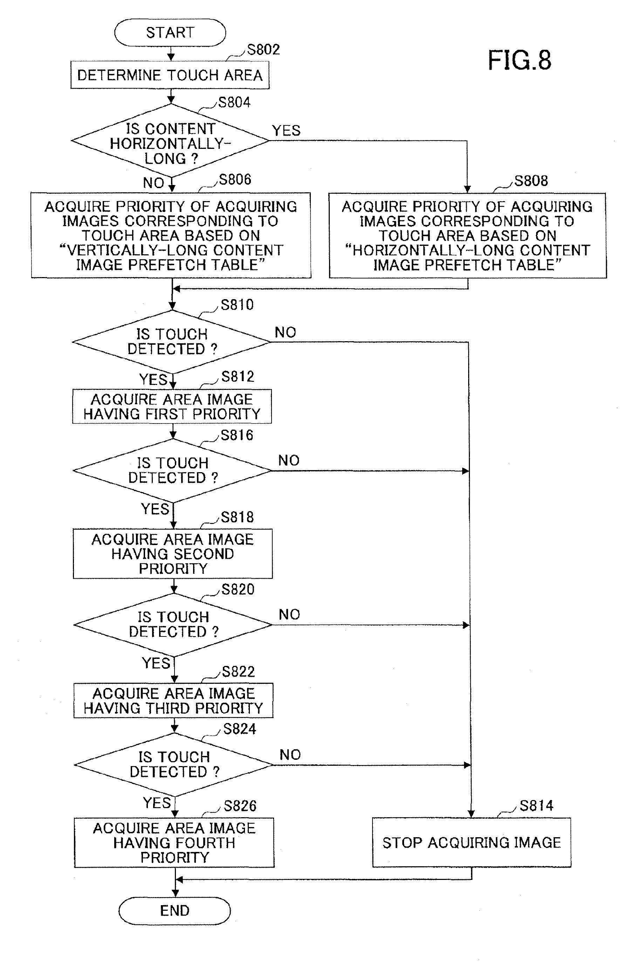

FIGS. 7 and 8 are flowcharts illustrating example processes of the mobile terminal 100.

The mobile terminal 100 determines whether (only) a partial screen (partial image) is displayed (step S702). Namely, the display controller 1184 determines whether a part of a content region is displayed.

When determining that no partial screen is displayed (NO in step S702), the mobile terminal 100 displays an HTML screen (step S704). Namely, the display controller 1184 causes the display unit 114 to continuously display the content region.

When determining that a partial screen is displayed (YES in step S702), the mobile terminal 100 determines whether the screen is touched (step S706). Namely, the display controller 1184 determines whether the screen is touched based on whether the information indicating the touch position is input from the input controller 1190.

When the information indicating the touch position is input from the input controller 1190, the display controller 1184 determines that the screen is touched. When no information indicating the touch position is input from the input controller 1190, the display controller 1184 does not determine that the screen is touched.

When not determining that the screen is touched (NO in step S706), the process goes back to step S702, so that it is determined that the partial screen is displayed again.

When determining that the screen is touched (YES in step S706), the mobile terminal 100 further determines whether the touched position is designated by an anchor (step S708). Namely, the display controller 1184 determines whether the touched position is designated by the anchor by determining whether the touch position input from the input controller 1190 is included in an area designated by an anchor.

When the touch position is included in an area designated by the anchor, it is determined that the touch position is designated by the anchor. When the touch position is not included in an area designated by an anchor, it is determined that the touch position is not designated by an anchor.

When determining that the touch position is designated by the anchor (YES in step S708), the mobile terminal 100 reads the anchor destination (step S710). Namely, when the determining that the touch position is designated by the anchor, the display controller 1184 inputs the information indicating the anchor destination to the radio controller 1182 to read the anchor destination.

For example, the URL (Uniform Resource Locator) of the link destination may be input as the information indicating the anchor destination. Further, as a response to the information indicating the anchor destination, the display controller 1184 displays the content of the anchor destination input by the radio controller 1182.

When determining that the touch position is not designated by an anchor (NO in step S708), the mobile terminal 100 prefetches an image and displays the image (step S712). Namely, the display controller 1184 sends a request to the prefetch image processor 1186 so as to receive the result of the image processing of the image included in the partial content region.

By using the result of the image processing of the image included in the partial content region from the prefetch image processor 1186, the display controller 1184 controls to display the partial content region.

FIG. 8 is an example flowchart of a process performed in step S712 of the operations of the mobile terminal 100 in FIG. 7.

The mobile terminal 100 determines a touch area (step S802). Namely, the prefetch image processor 1186 determines the screen area corresponding to the initial touch position input by the input controller 1190.

The mobile terminal 100 determines whether the received content is a horizontally-long content (step S804). Namely, the prefetch image processor 1186 determines whether the size of the content input by the radio controller 1182 is horizontally-long.

When determining that the content is not a horizontally-long content (NO in step S804), the mobile terminal 100 acquires priority data (priority) for drawing the touch area based on the vertically-long content image prefetch table (step S806).

Namely, when determining that the content is not a horizontally-long content, the prefetch image processor 1186 refers to the vertically-long content image prefetch table among the image prefetch tables stored in the storage 112 and acquires the priority order of the image acquisition areas corresponding to the screen area determined in step S802.

When determining that the content is a horizontally-long content (YES in step S804), the mobile terminal 100 acquires priority data (priority) for drawing the touch area based on the horizontally-long content image prefetch table (step S808). Namely, when determining that the content is a horizontally-long content, the prefetch image processor 1186 refers to the horizontally-long content image prefetch table among the image prefetch tables stored in the storage 112 and acquires the priority order of the image acquisition areas corresponding to the screen area determined in step S802.

After the priority of the image acquisition areas is acquired in step S806 or S808, the mobile terminal 100 determines whether touch is not detected (step S810). Namely, the prefetch image processor 1186 determines whether touch is not detected by determining whether the touch position is not input from the input controller 1190.

While the screen is touched, the information indicating the touch position is input from the input controller 1190 to the prefetch image processor 1186 every predetermined time period. Therefore, when no information indicating the touch position is input, it is determined that touch is not detected. Further, when the information indicating the touch position is continuously input, it is not determined that touch is not detected.

When it is not determined that touch is not detected (NO in step S810), the mobile terminal 100 acquires the image included in the partial area having the first priority (step S812). Namely, the prefetch image processor 1186 acquires the image included in the partial area having the first priority based on the priority acquired in step S806 or S808.

When determining that touch is not detected (YES in step S810), the mobile terminal 100 stops acquiring the image included in the partial area (step S814). Namely, when determining that the touch is not detected, the prefetch image processor 1186 stops acquiring the image included in the partial area.

After the image included in the partial area having the first priority is acquired in step S812, the mobile terminal 100 determines whether touch is not detected (step S816). Namely, the prefetch image processor 1186 determines whether touch is not detected by determining whether the touch position is not input from the input controller 1190.

When no information indicating the touch position is input, it is determined that touch is not detected. Further, when the information indicating the touch position is continuously input, it is not determined that touch is not detected.

When it is not determined that touch is not detected (NO in step S816), the mobile terminal 100 acquires the image included in the partial area having the second priority (step S818). Namely, the prefetch image processor 1186 acquires the image included in the partial area having the second priority based on the priority acquired in step S806 or S808.

When determining that touch is not detected (YES in step S816), the mobile terminal 100 stops acquiring the image included in the partial area (step S814). Namely, when determining that touch is not detected, the prefetch image processor 1186 stops acquiring the image included in the partial area.

After the image included in the partial area having the second priority is acquired in step S818, the mobile terminal 100 determines whether touch is not detected (step S820). Namely, the prefetch image processor 1186 determines whether touch is not detected by determining whether the touch position is not input from the input controller 1190.

When no information indicating the touch position is input, it is determined that touch is not detected. Further, when the information indicating the touch position is continuously input, it is not determined that touch is not detected.

When it is not determined that touch is not detected (NO in step S820), the mobile terminal 100 acquires the image included in the partial area having the third priority (step S822). Namely, the prefetch image processor 1186 acquires the image included in the partial area having the third priority based on the priority acquired in step S806 or S808.

When determining that touch is not detected (YES in step S820), the mobile terminal 100 stops acquiring the image included in the partial area (step S814). Namely, when determining that touch is not detected, the prefetch image processor 1186 stops acquiring the image included in the partial area.

After the image included in the partial area having the third priority is acquired in step S822, the mobile terminal 100 determines whether touch is not detected (step S824). Namely, the prefetch image processor 1186 determines whether touch is not detected by determining whether the touch position is not input from the input controller 1190.

When no information indicating the touch position is input, it is determined that touch is not detected. Further, when the information indicating the touch position is continuously input, it is not determined that touch is not detected.

When it is not determined that touch is not detected (NO in step S824), the mobile terminal 100 acquires the image included in the partial area having the fourth priority (step S826). Namely, the prefetch image processor 1186 acquires the image included in the partial area having the fourth priority based on the priority acquired in step S806 or S808.

When determining that touch is not detected (YES in step S824), the mobile terminal 100 stops acquiring the image included in the partial area (step S814). Namely, when determining that touch is not detected, the prefetch image processor 1186 stops acquiring the image included in the partial area.

According an embodiment, when only a part of the content region is displayed on the mobile terminal, a function to prefetch (acquire in advance) the image that is not being displayed is added (performed). Specifically, the display region is virtually divided into several regions. Based on the position where a user touches for dragging the touched position, the priority indicating the rank (order) of acquiring the partial contents adjoining the display region in the content region is determined.

Based on the priority, when a user touches the screen, the partial contents are acquired. Namely, even when no scrolling occurs, upon being touched, reading (prefetching) the images that are expected to be displayed upon the next scrolling is started.

By starting acquiring the partial contents upon being touched, when the screen is dragged, it may become possible to display the acquired partial contents in response to the drag operation with a minimum time loss (delay). Namely, it may become possible to display the bitmap screen comfortably in response to the drag operation.

Further, as soon as the touch is not detected, the image acquisition process is stopped. By stopping the image acquisition process, the energy consumption may be reduced.

### Modified example

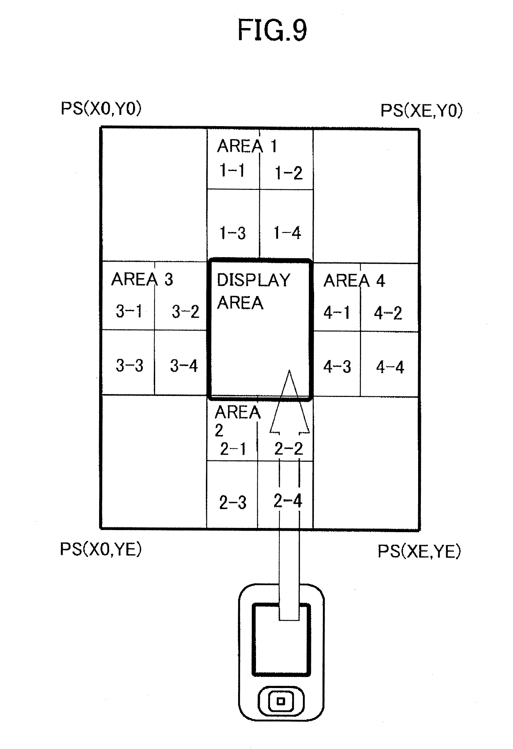

FIG. 9 illustrates the content region and the display region in modified example. In the example of FIG. 9, the content region is defined by the coordinates PS(X0,Y0), PS(XE,Y0), PS(X0,YE), and PS(XE,YE). The display region is defined by the coordinates PS((XE-X0)/3,(YE-Y0)/3), PS(2(XE-X0)/3,(YE-Y0)/3), PS((XE-X0)/3,2(YE-Y0)/3), and PS(2(XE-X0)/3 ,2(YE-Y0)/3).

Further, in the example of FIG. 9, the content region is virtually divided into nine regions. The size of the divided region may be substantially equal to the size of the display region. Further, in the example of FIG. 9, the virtually divided regions are virtually divided into four regions.

The mobile terminal 100 displays content region corresponding to one region. Namely, the mobile terminal 100 displays one of the divided regions of the content region. Further, herein, the divided region disposed on the upper side of the display region is called "area 1". The divided region disposed on the lower side of the display region is called "area 2". The divided region disposed on the left-hand side of the display region is called "area 3".

The divided region disposed on the right-hand side of the display region is called "area 4". Further, the upper left-hand part of the "area 1" is called an "area 1-1", the upper right-hand part of the "area 1" is called an "area 1-2", the lower left-hand part of the "area 1" is called an "area 1-3", and the lower right-hand part of the "area 1" is called an "area 1-4".

Further, the upper left-hand part of the "area 2" is called an "area 2-1", the upper right-hand part of the "area 2" is called an "area 2-2", the lower left-hand part of the "area 2" is called an "area 2-3", and the lower right-hand part of the "area 2" is called an "area 2-4".

Further, the upper left-hand part of the "area 3" is called an "area 3-1", the upper right-hand part of the "area 3" is called an "area 3-2", the lower left-hand part of the "area 3" is called an "area 3-3", and the lower right-hand part of the "area 3" is called an "area 3-4".

Further, the upper left-hand part of the "area 4" is called an "area 4-1", the upper right-hand part of the "area 4" is called an "area 4-2", the lower left-hand part of the "area 4" is called an "area 4-3", and the lower right-hand part of the "area 4" is called an "area 4-4".

In the mobile terminal 100, by virtually dividing the screen into plural regions, plural screen areas are formed. Namely, the display region is virtually divided into plural regions.

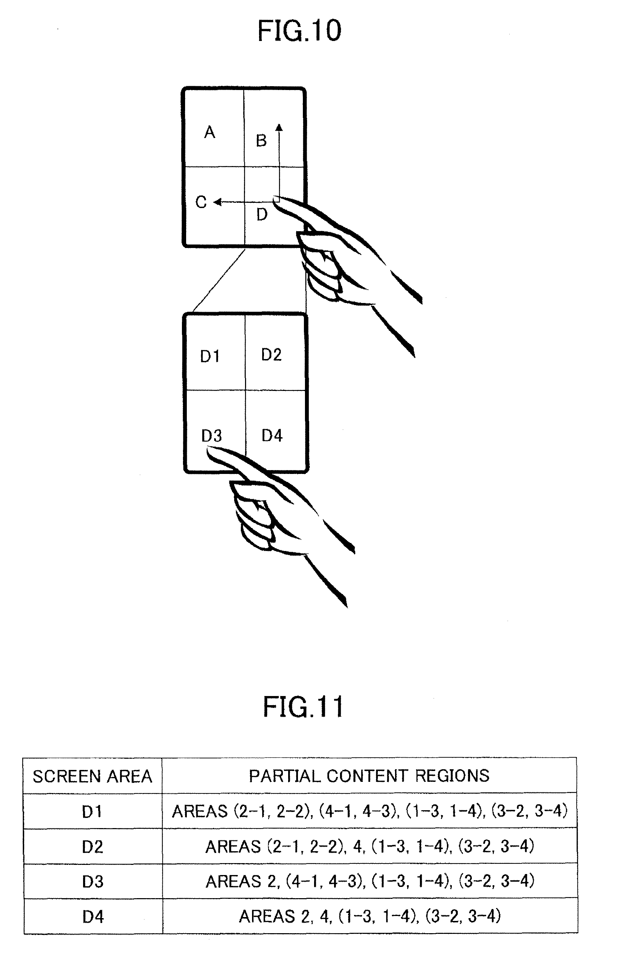

FIG. 10 illustrates an example of screen areas. In the example of FIG. 10, the screen is virtually divided into four divided regions (i.e., screen area A, screen area B, screen area C, and screen area D).

However, the number of the divided regions may be two, three, or even five or more. Further, in the example of FIG. 10, the screen area is virtually divided into four subdivided regions. However, the number of the subdivided regions may be two, three, or even five or more.

Herein, the upper left-hand subdivided region of the "screen area A" is called a "screen area A1", the upper right-hand subdivided region of the "screen area A" is called an "area A2", the lower left-hand subdivided region of the "screen area A" is called an "area A3", and the lower right-hand subdivided region of the "screen area "" is called an "area A4".

Further, the upper left-hand subdivided region of the "screen area B" is called a "screen area B1", the upper right-hand subdivided region of the "screen area B" is called an "area B2", the lower left-hand subdivided region of the "screen area B" is called an "area B3", and the lower right-hand subdivided region of the "screen area B" is called an "area B4". Further, the upper left-hand subdivided region of the "screen area C" is called a "screen area C1", the upper right-hand subdivided region of the "screen area C" is called an "area C2", the lower left-hand subdivided region of the "screen area C" is called an "area C3", and the lower right-hand subdivided region of the "screen area C" is called an "area C4".

Further, the upper left-hand subdivided region of the "screen area D" is called a "screen area D1", the upper right-hand subdivided region of the "screen area D" is called an "area D2", the lower left-hand subdivided region of the "screen area D" is called an "area D3", and the lower right-hand subdivided region of the "screen area D" is called an "area D4".

The mobile terminal 100 detects the touch position when a user touches the screen. Further, the mobile terminal 100 detects the initial touch position. Herein, after the screen is touched and than detached (become untouched), when the screen is touched again, the mobile terminal 100 recognizes (determines) the position of the (latest) touch as the initial touch position. The mobile terminal 100 detects the divided region including the initial touch position.

In the example of FIG. 10, the divided region including the initial touch position is screen area D. Further, in this modified example, the mobile terminal 100 detects the subdivided region including the initial touch position. In the example of FIG. 10, the subdivided region including the initial touch position is screen area D3.

In the mobile terminal 100, the screen area is associated with the partial content regions having an image to be preferentially acquired when the initial touch position is included in the screen area. More specifically, in the mobile terminal 100, the screen area is associated with the direction in which the touch position is more likely to be displaced from the initial touch position when the initial touch position is included in the screen area. In this modified example, the screen area corresponds to the subdivided region.

The direction in which the touch position is more likely to be displaced may be expressed using the terms, for example, upper, lower, left-hand, or right-hand. Further, the direction may be expressed using oblique directions. Further, in the mobile terminal 100, the partial content regions in the content region are set relative to the screen region.

When a user touches the screen, based on the initial touch position, the mobile terminal 100 performs a process for displaying the partial content regions. Specifically, based on the initial touch position, the mobile terminal 100 acquires the images of the partial content regions. The processes of acquiring the images may be sequentially performed based on the probabilities corresponding to the directions in which the touch position is displaced.

The mobile terminal 100 includes the image prefetch tables.

### Image prefetch table

FIG. 11 illustrates an example image prefetch table. FIG. 11 illustrates an example where the content region has the vertical distance greater than the horizontal distance. In the example of FIG. 11, the screen areas corresponding to the subdivided regions are associated with the partial content regions having images to be preferentially acquired when the initial touch position is included in the screen areas. In FIG. 11, the range designated as the partial content regions in this modified example differs from that in the example described above.

Specifically, the area of the partial content regions is substantially equal to the area (range) in which the touch position may be displaced (move) based on the displaced position.

For example, a case is described where the initial touch position is included in the area D1 and the touch position moves from the initial touch position. In this case, it may be assumed that the upper distance of the movable area of the touch position is substantially half of the vertical size of the displayed screen, the lower distance of the movable area of the touch position is substantially half of the vertical size of the displayed screen, the left-hand distance of the movable area of the touch position is substantially half of the horizontal size of the displayed screen, and the right-hand distance of the movable area of the touch position is substantially half of the horizontal size of the displayed screen.

Further, for example, a case is described where the initial touch position is included in the area D2 and the touch position moves from the initial touch position. In this case, it may be assumed that the upper distance of the movable area of the touch position is substantially half of the vertical size of the displayed screen, the lower distance of the movable area of the touch position is substantially half of the vertical size of the displayed screen, the left-hand distance of the movable area of the touch position is substantially the horizontal size of the displayed screen, and the right-hand distance of the movable area of the touch position is substantially half of the horizontal size of the displayed screen.

Further, for example, a case is described where the initial touch position is included in the area D3 and the touch position moves from the initial touch position. In this case, it may be assumed that the upper distance of the movable area of the touch position is substantially the vertical size of the displayed screen, the lower distance of the movable area of the touch position is substantially half of the vertical size of the displayed screen, the left-hand distance of the movable area of the touch position is substantially half of the horizontal size of the displayed screen, and the right-hand distance of the movable area of the touch position is substantially half of the horizontal size of the displayed screen.

Further, for example, a case is described where the initial touch position is included in the area D4 and the touch position moves from the initial touch position. In this case, it may be assumed that the upper distance of the movable area of the touch position is substantially the vertical size of the displayed screen, the lower distance of the movable area of the touch position is substantially half of the vertical size of the displayed screen, the left-hand distance of the movable area of the touch position is substantially the horizontal size of the displayed screen, and the right-hand distance of the movable area of the touch position is substantially half of the horizontal size of the displayed screen.

Therefore, the areas of the partial content regions including the images to be preferentially acquired may vary depending on the screen areas including the initial touch position.

FIG. 11 illustrates a modified example of the image prefetch table. FIG. 11 illustrate an example relationship between the screen areas D1 through D4 and the corresponding partial area regions having the images to be preferentially acquired when the initial touch position is included in the screen areas D1 through D4. The image prefetch table may be similarly provided for the other screen areas.

When the initial touch position is included in the area D1, it may be assumed that the touch position is less likely to be displaced to the lower side and the right-hand side. Further, the vertical distance of the content region is greater than the horizontal distance of the content region. Therefore, it may be assumed that the touch position is more likely to be displaced in the vertical direction rather than in the horizontal direction.

As a result, it may be assumed that the decreasing order of the probability corresponding to the directions in which the touch position is more likely to be displaced are the upper direction, the left-hand direction, the lower direction, and the right-hand direction. Therefore, the order of acquiring the partial contents relative to the screen area D1 are areas (2-1, 2-2), areas (4-1, 4-3), areas (1-3, 1-4), and the areas (3-2, 3-4). Herein, the areas included in the same parentheses have the same priority. Namely, the images of the areas included in the same parentheses are acquired at the same time.

When the initial touch position is included in the area D2, it may be assumed that the touch position is less likely to be displaced to the lower side and the right-hand side. Further, the vertical distance of the content region is greater than the horizontal distance of the content region. Therefore, it may be assumed that the touch position is more likely to be displaced in the vertical direction rather than in the horizontal direction.

As a result, it may be assumed that the decreasing order of the probability corresponding to the directions in which the touch position is more likely to be displaced are the upper direction, the left-hand direction, the lower direction, and the right-hand direction. Therefore, the order of acquiring the partial contents relative to the screen area D2 are areas (2-1, 2-2), areas (4-1, 4-2, 4-3, 4-4), areas (1-3, 1-4), and the areas (3-2, 3-4).

When the initial touch position is included in the area D3, it may be assumed that the touch position is less likely to be displaced to the lower side and the left-hand side. Further, the vertical distance of the content region is greater than the horizontal distance of the content region. Therefore, it may be assumed that the touch position is more likely to be displaced in the vertical direction rather than in the horizontal direction.

As a result, it may be assumed that the decreasing order of the probability corresponding to the directions in which the touch position is more likely to be displaced are the upper direction, the right-hand direction, the lower direction, and the left-hand direction. Therefore, the order of acquiring the partial contents relative to the screen area D3 are areas (2-1, 2-2, 2-3, 2-4), areas (4-1, 4-3), areas (1-3, 1-4), and the areas (3-2, 3-4).

When the initial touch position is included in the area D4, it may be assumed that the touch position is less likely to be displaced to the lower side and the left-hand side. Further, the vertical distance of the content region is greater than the horizontal distance of the content region. Therefore, it may be assumed that the touch position is more likely to be displaced in the vertical direction rather than in the horizontal direction.

As a result, it may be assumed that the decreasing order of the probability corresponding to the directions in which the touch position is more likely to be displaced are the upper direction, the left-hand direction, the lower direction, and the right-hand direction. Therefore, the order of acquiring the partial contents relative to the screen area D4 are areas (2-1, 2-2, 2-3, 2-4), areas (4-1, 4-2, 4-3, 4-4), areas (1-3, 1-4), and the areas (3-2, 3-4).

The image prefetch table when the vertical distance is less than the horizontal distance in the content region may also be similarly provided.

The mobile terminal 100 refers to the image prefetch table, and acquires the images included in the partial content regions based on the screen area including the initial touch position. The areas of the partial content regions may vary depending on the screen areas.

The mobile terminal 100 in this modified example is substantially the same as the mobile terminal described with reference to FIGS. 5 and 6.

The operations of the mobile terminal 100 in this modified example are substantially the same as the operations described with reference to FIGS. 7 and 8.

In this modified example, it may become possible to vary the range of the partial content regions to be acquired based on the screen area including the initial touch position. Because of this feature, it may become possible to reduce the workload in the calculation when the images included in the partial content regions are acquired. Further, it may become possible to reduce the capacity for storing the acquired images.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of superiority or inferiority of the invention. Although the embodiment of the present inventions has been described in detail, it is to be understood that various changes, substitutions, and alterations could be made hereto without departing from the scope of the invention.

## Claims

1. A mobile terminal comprising:
a display unit configured to display a display image generated based on a content which is acquired;
a touched divided region detector configured to detect a divided region which is touched from among divided regions formed by virtually dividing a screen of the display unit;
a storage configured to store a table in which the divided region is associated with an area having a display image to be preferentially generated among display images generated based on the content;
an image processor configured to, when the screen of the display unit is touched, refer to the table, specify an area corresponding to the divided region detected by the touched divided region detector, and generate the display image corresponding to the area specified in the content; and
a display controller configured to display the display image generated by the image processor on the display unit in accordance with displacement of a position which is touched.

2. The mobile terminal according to claim 1, further comprising:
a content size detector configured to determine a size of the display image,
wherein, the table includes plural tables corresponding to different sizes of the display images.

3. The mobile terminal according to claim 2,
wherein the content size detector is configured to determine the size based on a vertical distance and a horizontal distance of the display image.

4. The mobile terminal according to claim 1,
wherein the touched divided region detector is configured to detect the divided region when the region which is not designated by an anchor is touched.

5. A content display program executed by a mobile terminal including a display unit displaying a display image generated based on a content being acquired, the content display program comprising:
detecting a divided region which is touched from among divided regions formed by virtually dividing a screen of the display unit;
referring to, when the screen of the display unit is touched, a table in which the divided region is associated with an area having a display image to be preferentially generated among display images generated based on the content;
specifying an area corresponding to the divided region detected by the referring;
generating the display image corresponding to the area specified in the content by the specifying; and
displaying the display image generated by the generating on the display unit in accordance with displacement of a position which is touched.
